# EUROPEAN PATENT APPLICATION

(11) **EP 1 591 337 A2**
(43) Date of publication of application: **02.11.2005**
(21) Application number: 05103546.7
(22) Date of filing: 28.04.2005
(51) Int. Cl.: B62B 3/10, B62B 5/00, B62B 1/08

(54) **Apparatus for supporting a sack truck**

(30) Priority: 30.04.2004 GB 0409685
(71) Applicant: Farr, Leslie, Basingstoke, Berkshire RG26 5PU (GB)
(72) Inventor: Farr, Leslie, Basingstoke, Berkshire RG26 5PU (GB)
(74) Representative: Harrison Goddard Foote

(57) **Abstract**

There is disclosed an apparatus for supporting a sack truck, the apparatus comprising a body portion carrying one or more rolling elements; and at least one connecting member for releasably connecting the body portion to the sack truck at a desired position in relation to the sack truck in which the sack truck will roll on both wheels of said sack truck and said rolling element, wherein the body portion is securable at the desired position.

The apparatus helps to stabilise a load supported on the sack truck, particularly heavy or unwieldy loads.

## Description

### Field of Invention

The present invention relates to an apparatus for supporting a sack truck. The apparatus stabilises a load that is carried by the sack truck. The present invention also relates to a method of supporting a sack truck.

### Background to the Invention

Sack trucks or porter trucks are used in a wide variety of applications to transport loads, particularly heavy and/ or bulky loads. For example, sack trucks are often used in warehouse environments to move loads from one area to another or in offices to move files or boxes. Sack trucks are also used in gardening or horticultural applications to move bags of soil, fertiliser and other heavy, unwieldy loads.

Sack trucks often comprise two parallel shafts with an end plate situated therebetween upon which the load to be transported is rested. Conventional sack-trucks are two-wheeled, with each wheel being positioned generally the width of the end plate apart and behind the end plate. The shafts each comprise a handle at the opposing end to the end place which are gripped by the user.

To transport a load, the load is placed on the end plate, the sack-truck is then tipped by the user using the handles and pushed or pulled to the required location.

There are known variations of sack truck described above, depending on the use requirements of the sack-truck. Some sack-trucks have additional features which help move objects up and down stairs. Sack trucks which can also be used as "drag-along" truck for heavy or bulky loads are also available. In this instance, the sack-truck is horizontal when used, and the user grabs additional handles which project upwards from the shaft of the sack truck.

Known sack trucks have the disadvantage that they are often unstable when being pulled or pushed over rough or varying terrain. A sack truck often has a centre of gravity that is some distance from the user gripping the handles, which can make balancing the load difficult. This makes balancing a load carried on the sack truck difficult and can lead to the load falling off the sack truck. In some instances, spilling of the load may result in damage to the load or injury to the user or other people in the vicinity.

It is therefore an aim of embodiments of the present invention to at least partly mitigate some of the problems associated with the prior art.

### Statements of Invention

According to a first aspect of the invention, there is provided apparatus for supporting a sack truck comprising a body portion carrying one or more rolling elements; and at least one connecting member for releasably connecting the body portion to said sack truck at a desired position in relation to the sack truck in which the sack truck will roll on both wheels of said sack truck and said rolling element, wherein said body portion is securable at said desired position.

The apparatus supports the sack-truck, which stabilises a load carried on the sack-truck. The apparatus thus provides the advantage of balancing the load when it is carried by the sack-truck so making it easier for a user to transport loads. The apparatus is particularly advantageous when carrying unwieldy or heavy loads.

Preferably, the body portion is securable at a range of desired positions in relation to the sack truck. Preferably, the desired position is selected by locating the connecting member at a predetermined angular orientation.

Preferably, the connecting member may comprise a pair of arms. In an alternative embodiment, the connecting member may comprise a single arm or plate.

Advantageously, the connecting member comprises one or more arms with a securing element at an end. Preferably, the securing element comprises a snap-fitting. It is envisaged that the present invention may comprise different types of securing elements.

Preferably, the, or each arm, is pivotally mounted on the body portion.

In a preferred embodiment, the body portion comprises a rectangular frame, said frame having opposing end walls and further comprising at least one strut extending between said opposing end walls. In alternative embodiments, the apparatus may comprise different shaped frames, such as triangular, octagonal or other shapes.

Preferably, the, or each strut comprises at least one bore which an axle carrying at least one rolling element runs therethrough.

Preferably, the frame further comprises opposing side walls, which comprises at least one bore, said bore having an axis common to the bore(s) of the struts, wherein an axle carrying at least one rolling element runs therethrough.

Preferably, the apparatus further comprises eight rolling elements arranged in a staggered orientation relative to each other. Preferably, four rolling elements are situated in an external position relative to the frame.

The apparatus may comprise one or more wheels as rolling elements. Alternatively, the rolling element may be a single roller. Alternatively, the rolling element may be at least one caster.

The apparatus, when fitted to a sack -truck, provides a larger surface area in contact with the ground so helping to spread the load over a larger area, thus making the sack-truck easier to control by the user.

Preferably, the apparatus further comprising means for attaching the apparatus to an axle of a said sack truck. Preferably, said means comprises a pair of connecting rods. In an alternative embodiment, the apparatus does not have a connecting rod. In a further embodiment, the apparatus may comprise a single connecting rod. In a yet further embodiment the apparatus may comprise a plurality of connecting rods.

In a second aspect of the invention, there is provided a method for stabilising a load on a sack truck comprising:
positioning the load on the sack truck;
attaching an apparatus for supporting a sack truck to an axle of said sack truck, said apparatus comprising at least one rolling element;
securing said apparatus at a desired position in relation to the sack truck such that the sack truck will roll on both wheels of said sack truck and said rolling element.

Preferably, the desired position is selected by locating a connecting member of the apparatus at a predetermined angular orientation.

The apparatus also provides the advantage that it is detachable from the sack-truck and so can be used with any suitably-sized sack truck.

It will be envisaged that the apparatus of the present invention can be of varying sizes to fit different sized sack-trucks. It will be further envisaged that the apparatus can also be used to support or stabilise other types of load carrying devices, particularly two-wheeled devices.

### Detailed Description

The invention will now be described, by way of example only, with reference to the accompanying drawings, in which:

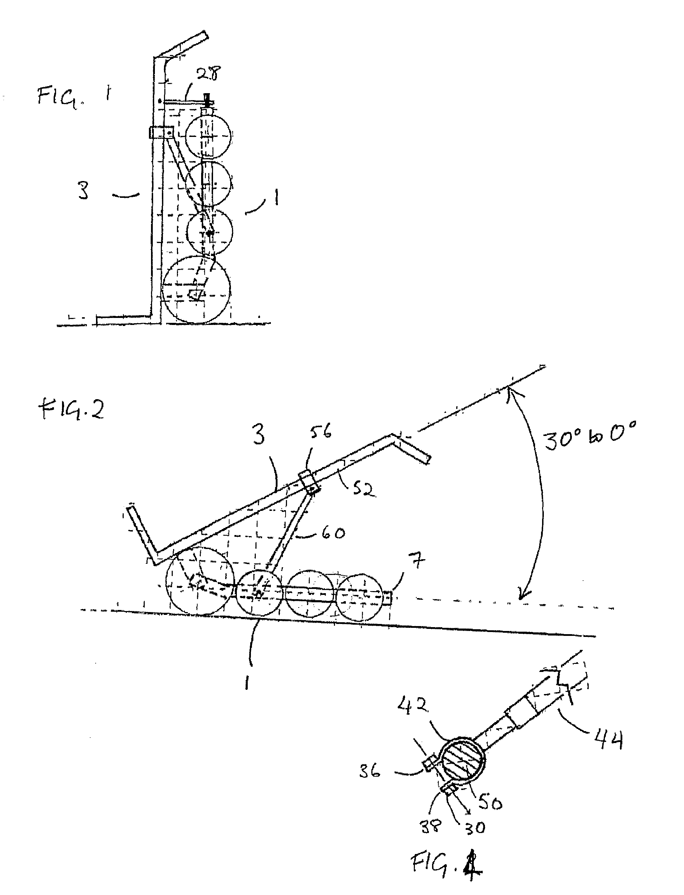

Figure 1 is a side view of an apparatus of the present invention, when attached to a sack truck;
Figure 2 is a side view of the apparatus of the present invention as in use;
Figure 3 is a top view of the apparatus of the present invention;
Figure 4 is a top view of the means for attaching the apparatus to an axle of a sack truck;
Figure 5 is a perspective view of the apparatus of the present invention.

Referring to the figures, there is provided an apparatus 1 for supporting a sack truck 3. The apparatus 1, when in position, stabilises a load (not shown) carried on the sack truck 3 and helps to balance the load, thus making transport of the load easier for the user.

The apparatus comprises a body portion 5. In the detailed embodiment, the body portion comprises a rectangular frame 7. The frame 7 is preferably lightweight and may be fabricated from plastic and metal components. The frame 7 comprises a pair of opposed end walls 9, 11, and also a pair of opposed side walls 13, 15. End wall 9 is generally the same size and shape as end wall 11 and end walls 9, 11 are generally parallel to each other. Similarly, side wall 13 runs generally parallel to side wall 15 and corresponds in size and shape thereto.

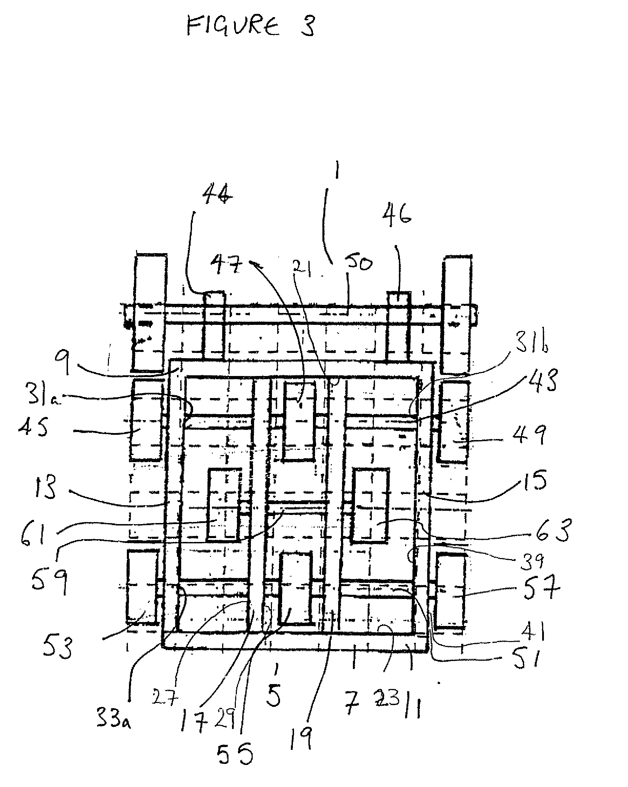

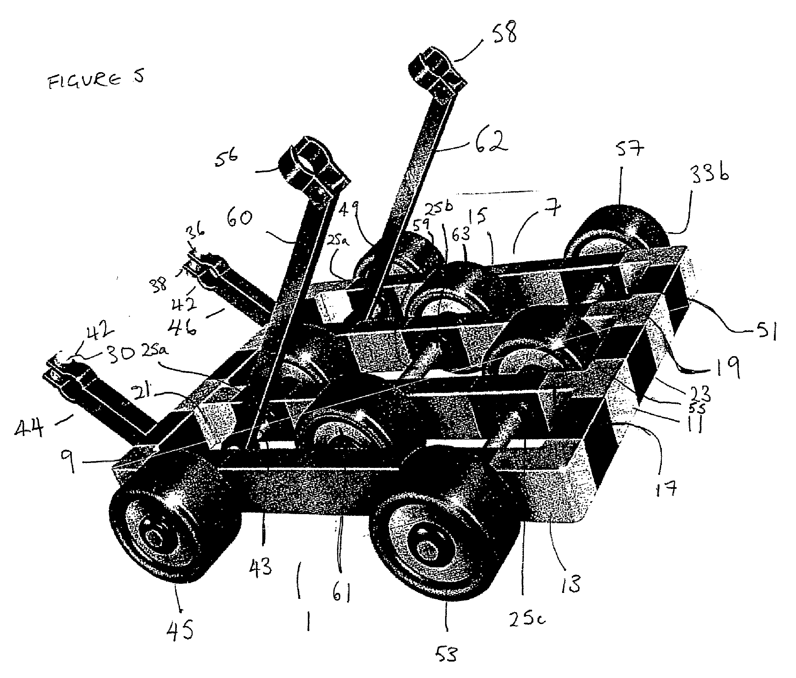

Extending between the opposed end walls are two struts 17, 19, which are juxtaposed generally parallel to each other. As shown in Figure 5, the struts have a height that is less than the height of either the side walls 13, 15 or end walls 9, 11. Each strut is attached at one end to an inside surface 21 of end wall 9 and the opposed end to an inside surface 23 of end wall 11. Each strut comprises three through bores 25a, 25b, 25c running from one horizontal side surface 27 of each strut 17, 19 to the other horizontal side surface 29 of strut 17, 19. Bore 25a of strut 17 have a common axis to the bore 25a of strut 19 and thus bores 25a are aligned. Similarly bore 25b of strut 17 shares the same axis as bore 25b of strut 19, whilst bore 25c of strut 17 has a common axis with bore 25c of strut 19. It will be apparent that bores 25b are aligned, whilst bores 25c are also aligned.

Side wall 13 comprises two through bores 31a, 33a running from an external surface 35 through to an internal surface 37. Bore 31a is aligned with bore 25a of struts 17, 19, and has a common axis therewith. Bore 33a has an axis common to bore 25c of struts 17, 19. Side wall 15 also comprises two through bores 31b, 33b which run from an external surface 39 to an internal surface 41. Bore 31b shares a common axis to bore 25a of the struts 17, 19 and bore 31a of side wall 13. Bores 25c of struts 17, 19, bore 33a of side wall 13 and bore 33b of side wall 15 further have a common axis. Thus, the frame 7 comprises two aligned pathways (not shown) which run from one side to the other of the frame.

An axle 43 is carried in aligned bores 31a of side wall 13, 25a of both struts 17, 19 and bore 31b of side wall 15. The axle extends from one side of the frame to the other through each of the bores 31a, 25a, 31b. The axle carries three wheels 45, 47, 49. Wheel 45 is carried outside and adjacent to side wall 13, whilst wheel 47 is situated between strut 17 and strut 19. Wheel 49 is positioned outside and adjacent to side wall 15.

A second axle 51 is carried by aligned bores 33a of side wall 13, 25c of both struts and bore 33b of side wall 15. Axle 51 is generally parallel to axle 43 and also carries three wheels 53, 55, 57. Wheel 53 is carried on the axle at a position outside and adjacent to side wall 13. Wheel 55 is carried on the axle at a position between strut 17 and strut 19. Axle 51 carries wheel 57 at a position outside and adjacent to side wall 15 of the frame 7.

A third axle 59 is carried by through bores 25b of strut 17, 19. Axle 59 is situated between axle 43 and 51 in the frame 7 and is generally parallel to axles 43 and 51. Axle 59 carries two wheels 61, 63. Wheel 61 is carried between side wall 13 and strut 17, whilst wheel 63 is situated between side wall 15 and strut 19. There are no bores in the side walls 13 or 15 that correspond to bores 25b of strut 17, 19. Thus wheels 47, 55, 61, 63 are considered to be "internal" wheels, since they are carried in a position within the frame, whilst wheels 45, 49 53 and 57 are considered "external" wheels, since they are carried outside the frame 7. Figure 5 shows the wheels in a staggered orientation relative to each other.

In the described embodiments, the wheels are 4 inches in diameter and are 1 ½ inches wide.

Apparatus 1 also comprises a connecting member for removably securing the apparatus 1 to a sack truck 3. In the detailed embodiment, the connecting member comprises a pair of arms 60, 62. Arm 60 is pivotally mounted on axle 43 between side wall 13 and strut 17. Arm 62 is pivotally mounted on axle 43 between side wall 15 and strut 19. Arms 60 and 62 are substantially identical to each other in shape and length and are rigid so as to support a load carried by the sack truck 3. Arms 60, 62 are manufactured from a material capable of withstanding the weight of the load carried. Such material may include a metal such as steel.

Arms 60, 62 each have a securing element on an end not mounted on the frame 7. In the described embodiment, the securing element is a snap-fitting 56, 58, which is sized to be pushed against and snap-fitted to a shaft of the sack-truck 3. Snap fitting 56 secures arm 60 to shaft 54 of the sack-truck and is moveable along the shaft 54 before being locked to the shaft 54. Snap fitting 58 secures arm 62 to shaft 52 of the sack truck 3 and is also moveable along shaft 52 before being locked at a desired position.

As shown by Figure 5, snap fittings 56, 58 are joined to the arms 60, 62 at an angle to enable them to fit over shafts 52, 54 of the sack-truck 3. Snap fitting 56, 58 provides a secure connection between the apparatus and the shaft 54 of the sack-truck 3 and so hold the apparatus in a desired location relative to the sack truck 3. When the angle of orientation between the apparatus 1 and the sack-truck 3 needs to be altered, the apparatus is manually pulled away from the sack-truck to a desired angle. The snap fittings 56, 58 move up or down shaft 52, 54 of the sack-truck 3 correspondingly. The snap fittings 56, 58 will then be locked in place on the shaft 52, 54 of the sack-truck 3, when the apparatus 1 is at the required angle of orientation relative to the sack-truck.

The snap fittings 56, 58 are locked in position on the shaft 52, 54 of the sack-truck 3. Arms 60, 62 enable the apparatus 1 to be locked in a range of desired positions at any permitted angular orientation in relation to the sack-truck 3.

The apparatus 1 further comprises means for attaching apparatus to an axle 50 of the sack-truck 3. In the describing embodiment, such means comprises a pair of connecting rods 44, 46. Connecting rods 44, 46 are attached to the external surface of end wall 9 and projects outwards therefrom. Each rod 44, 46 has means for locking the apparatus 1 to an axle of the sack-truck 3. In this instance, such locking means comprises a snap fitting 42. Snap fitting 42 comprises a pair of projections 36, 38 each with a throughbore (not shown) which a bolt 30 may be passed once the snap fittings have been fitted to the axle of the sack-truck to secure the rods 44, 46 to the axle of the sack-truck 3. The connecting rods 44, 46 provide an additional means of securing the apparatus 1 to the sack-truck 3.

The apparatus further comprises a fastener 28 for holding the apparatus 1 in a storage position when not in use. Fastener 28 may be a chain or elastic hook and holds the apparatus 1 in a vertical position adjacent to the frame of the sack-truck, thus enabling the apparatus to be transported with the sack-truck and kept out of the user's way when not required.

To use the apparatus 1, the apparatus 1 is unlocked from its storing position. A load (not shown) is placed on the sack truck 3 in a conventional manner. The connecting rods 44, 46 are then attached to the axle of the sack-truck by pushing or snapping the snap fittings over the axle. The bolt 30 may then be screwed into the through bores 32, 34 to secure the connecting rod in place.

The arms 60, 62, are then positioned on shafts 52, 54 of the sack-truck. The frame of the apparatus 1 is then pulled back until a desired angle between the sack-truck 3 and the apparatus 1 is created. The desired angle is the angle at which is it considered most suitable to accommodate the configuration of the load being carried. It will be appreciated that the desired angle will differ according to the nature of the load being carried. Thus, the weight of the load or its size or shape will contribute to the user's decision regarding the desired angle of orientation.

The apparatus is then locked at the desired angle using the securing element of the arms. Using the sack-truck handles, the load is then pulled back until the apparatus wheels are flat on the ground. The wheels of the sack-truck are in line with the wheels of the apparatus and thus also take some of the load. When the weight of the load is positioned over both the wheels of the sack-truck and the wheels of the apparatus, the load is easily transportable to the required destination by the user executing a pulling or pushing motion. The user does not, unlike with conventional sack-trucks, have to balance the load, thus making transporting loads much easier and more convenient.

When not in use, the apparatus may be stored on the sack truck by way of the fastener 28 which holds the apparatus 1 in a vertical position adjacent to the shafts of the sack-truck 3.

## Claims

1. Apparatus for supporting a sack truck comprising:
a body portion carrying one or more rolling elements; and
at least one connecting member for releasably connecting the body portion to said sack truck at a desired position in relation to the sack truck in which the sack truck will roll on both wheels of said sack truck and said rolling element, wherein said body portion is securable at said desired position.

2. Apparatus of claim 1, wherein the body portion is securable at a range of desired positions in relation to the sack truck.

3. Apparatus of claim 1 or claim 2, wherein the desired position is selected by locating the connecting member at a predetermined angular orientation.

4. Apparatus of any preceding claim, wherein the connecting member comprises one or more arms with a securing element at an end.

5. Apparatus of claim 4, wherein the securing element comprises a snap-fitting.

6. Apparatus of claim 4, wherein the, or each arm, is pivotally mounted on the body portion.

7. Apparatus of any preceding claim, wherein the body portion comprises a rectangular frame, said frame having opposing end walls and further comprising at least one strut extending between said opposing end walls.

8. Apparatus of claim 7, wherein the, or each strut comprises at least one bore which an axle carrying at least one rolling element runs therethrough.

9. Apparatus of claim 7 or claim 8, wherein the frame further comprises opposing side walls, which comprises at least one bore, said bore having an axis common to the bore(s) of the struts, wherein an axle carrying at least one rolling element runs therethrough.

10. Apparatus of any preceding claim further comprising eight rolling elements arranged in a staggered orientation relative to each other.

11. Apparatus of claim 10, wherein four rolling elements are situated in an external position relative to the frame.

12. Apparatus of any preceding claim, further comprising means for attaching the apparatus to an axle of a said sack truck.

13. A method for stabilising a load on a sack truck comprising:
positioning the load on the sack truck;
attaching an apparatus for supporting a sack truck to an axle of said sack truck, said apparatus comprising at least one rolling element;
securing said apparatus at a desired position in relation to the sack truck such that the sack truck will roll on both wheels of said sack truck and said rolling element.

14. The method of claim 13, wherein the desired position is selected by locating a connecting member of the apparatus at a predetermined angular orientation.
